# FASCICULE DE BREVET EUROPEEN

(11) **EP 2 135 441 B1**
(45) Date de publication et mention de la délivrance du brevet: **14.07.2010**
(21) Numéro de dépôt: 08762133.0
(22) Date de dépôt: 20.02.2008
(51) Int. Cl.: H04N 5/00

(54) **PROCEDE DE TELECHARGEMENT ET D'ACTUALISATION D'APPLICATIONS DANS UN BOITIER RECEPTEUR/DECODEUR DE TELEVISION**
VERFAHREN ZUM HERUNTERLADEN UND AKTUALISIEREN VON ANWENDUNGEN IN EINEM FERNSEHEMPFÄNGER- BZW. -DECODIERUNGSGEHÄUSE
METHOD FOR DOWNLOADING AND UPDATING APPLICATIONS IN A TELEVISION RECEIVER/DECODER HOUSING

(30) Priorité: 02.03.2007 FR 0753622
(43) Date de publication de la demande: 23.12.2009
(73) Titulaire: SAGEM COMMUNICATIONS SAS, 92848 Rueil Malmaison Cedex (FR)
(72) Inventeur: CADON, Claude-André, F-78600 Maisons-Laffitte (FR); HERGAULT, Stéphane, F-35520 La Mézière (FR)
(74) Mandataire: Schmit, Christian Norbert Marie
(86) Numéro de dépôt international: PCT/FR2008/050286
(87) Numéro de publication internationale: WO 2008/113938

(56) Documents cités:
- EP-A- 1 355 496
- EP-A- 1 662 361
- FR-A- 2 822 329
- US-A1- 2003 061 604
- US-A1- 2003 204 848
- US-A1- 2004 131 020

## Description

L'invention a pour objet un procédé de téléchargement dans un boîtier récepteur/décodeur de télévision.

Le domaine de l'invention est celui des boîtiers récepteur décodeur de télévision. Ces boîtiers sont aussi connus sous le nom de STB (Set Top Box, pour la boîte que l'on met au dessus). Plus précisément le domaine de l'invention est celui de la mise à jour de la ou des applications mises en oeuvres par ces STB. Un tel programme est la plus part du temps appelé firmware ou microcode/micrologiciel. Il ne faut pas ici se laisser abuser par le préfixe micro. La taille en mémoire d'une telle application atteint traditionnellement jusqu'à quatre Mo (Mégaoctets) voir plus.

Un but de l'invention est de permettre la mise à jour d'une telle application tout en conservant, pendant la mise à jour, l'essentiel voir l'intégralité des fonctionnalités de la STB.

Dans l'état de la technique le microcode d'une STB est diffusé de la même manière qu'un programme multimédia. La STB est apte à détecter la diffusion d'une telle mise à jour. Lorsque la disponibilité d'une telle mise à jour est détectée, dans le meilleur des cas, la STB demande à l'utilisateur s'il souhaite mettre à jour le microcode. Dans l'affirmative la STB est indisponible tout le temps que va durer la mise à jour. Dans la mesure où les débits alloués à la transmission des mises à jour sont faibles, une telle mise à jour prend jusqu'à une heure. Cela est un problème car la disponibilité d'une telle mise à jour est détectée lors de la mise sous tension de la STB, c'est-à-dire lorsque son utilisateur souhaite utiliser les fonctions de la STB.

La mise à jour est en effet réalisée par un programme loader (pour chargeur) qui écrase l'ancien microcode, ce qui rend son exécution impossible.

Dans l'invention on résout ces problèmes en autorisant la coexistence de plusieurs microcodes dans une STB. Le microcode exécuté au démarrage de la STB dépend alors d'un paramétrage de la STB. Ainsi lorsque que la disponibilité d'un nouveau microcode est détecté, une partie des ressources de la STB est affectée à l'enregistrement de ce nouveau microcode à coté du ou des microcodes existants. Lors du démarrage suivant, ou à la fin de l'enregistrement, l'utilisateur est averti de la disponibilité de ce nouveau microcode et peut le choisir comme microcode par défaut, c'est-à-dire changer le paramétrage de démarrage de la STB. Dans l'invention la STB comporte au moins deux dispositifs d'entrée, l'un de ces dispositifs étant affecté à l'acquisition pour enregistrement du nouveau microcode. Un dispositif d'entrée est d'une manière générale un dispositif de réception de données. Un dispositif d'entrée est, par exemple, un tuner, un lecteur de CD/DVD, un port série (RS232, USB, ...) ...

Dans l'état de la technique il est connu les documents FR2 822 329 A et US 2003/0061604 A qui décrivent chacun un procédé de réception /décodage de télévision dans lequel une mémoire est chargée avec plusieurs versions de microcode.

Les documents EP 1 355 796 A et US 2003/0204848 A décrivent quand à eux un dispositif de réception décodage de télévision comprenant un dispositif de gestion de priorité pour l'allocation d'une pluralité de tuners à des tâches incluant des mises à jour de logiciel.

Ces documents ne permettent de résoudre ce problème comme dans l'invention. La combinaison de ces documents n'aboutirait pas à l'objet de l'invention car aucun desdits documents ne suggère de laisser à l'utilisateur la possibilité de configurer la version de microcode à exécuter au démarrage.

Il est également connu le document US 2004/0131020 A qui décrit un récepteur configurable par l'utilisateur. Cependant, la configuration porte sur la langue et l'interface utilisateur, ce qui n'est pas comparable au gestionnaire de démarrage spécifié dans l'invention.

L'invention a donc pour objet un procédé de téléchargement d'une application de mise à jour d'une nouvelle version d'un microcode d'un récepteur/décodeur de télévision tel que spécifié dans la revendication 1.

Dans une variante le procédé selon l'invention est aussi **caractérisé en ce qu**'il comporte une étape de mise à jour d'une mémoire de configuration dont le contenu désigne l'application a exécuter au démarrage du récepteur décodeur de télévision.

Dans une variante le procédé selon l'invention est aussi **caractérisé en** ce que le premier dispositif de réception de données est un tuner.

Dans une variante le procédé selon l'invention est aussi **caractérisé en ce que** le deuxième dispositif de réception de données est un tuner.

Dans une variante le procédé selon l'invention est aussi **caractérisé en ce que** le deuxième dispositif de réception de données est un port de connexion d'un périphérique local parmi la liste formé par au moins: USB, Wifi, IEE1394.

Dans une variante le procédé selon l'invention est aussi **caractérisé en ce que** le support de sauvegarde est un périphérique de stockage de masse intégré au récepteur décodeur de télévision.

Dans une variante le procédé selon l'invention est aussi **caractérisé en ce qu**e l'enregistrement de la nouvelle application est sécurisée au moins par l'authentification de la source de données délivrant les données correspondant à l'application.

L'invention sera mieux comprise à la lecture de la description qui suit et à l'examen des figures qui l'accompagnent. Celles-ci sont présentées à titre indicatif et nullement limitatif de l'invention. Les figures montrent:
- Figure 1 : des moyens permettant la mise en oeuvre du procédé selon l'invention,
- Figure 2: des étapes du procédé selon l'invention.

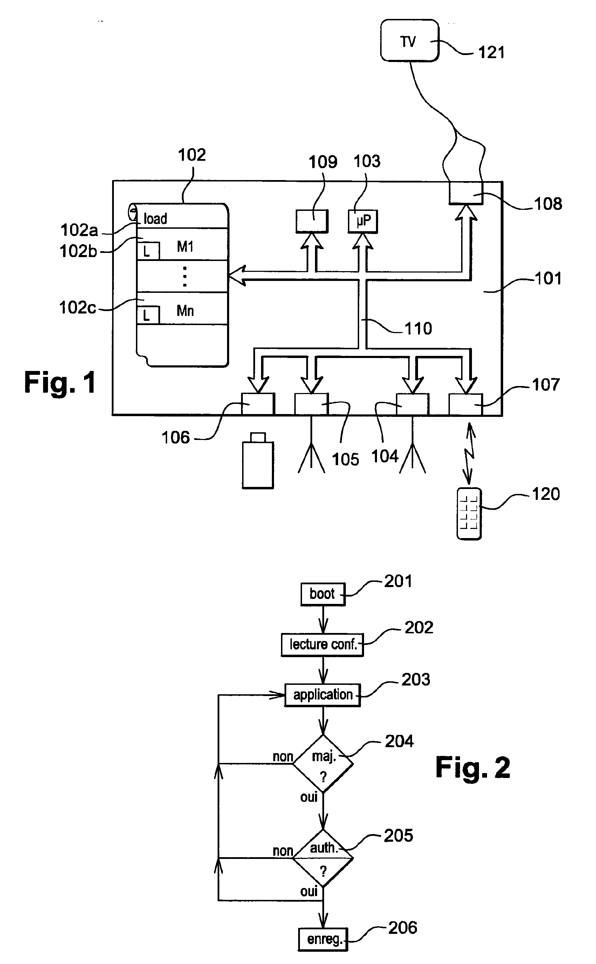

La figure 1 montre un dispositif 101 récepteur décodeur de télévision ci-après désigné comme la STB 101.

La STB 101 comporte une mémoire 102 de programme comportant des codes instructions correspondant aux fonctions mises en oeuvre par la STB. Ces codes instructions sont exécutés par un microprocesseur 103 de la STB 101. D'une manière générale, dans cette description, lorsque l'on prête une action à un dispositif cette action est en fait réalisée par un microprocesseur de ce dispositif commandé par des codes instructions enregistrés dans une mémoire de ce dispositif.

La figure 1 montre que le mémoire 102 comporte plusieurs zones, chacune de ces zones correspondant ici à une application. Dans cette description on présente la mémoire 102 comme une mémoire unitaire. Il peut en être autrement dans la pratique comme cela va être illustré par la suite.

La mémoire 102 comporte une zone 102a comportant des codes instructions correspondant à une séquence de démarrage de la STB 101. Typiquement ces codes instructions sont enregistrés dans une mémoire en lecture seule de la STB 101 et/ou sur un composant électronique mémoire dédié.

La mémoire 102 comporte une zone 102b comportant des codes instructions correspondant à une version du microcode de la STB 101. Dans l'invention la mémoire 102 comporte au moins une deuxième zone 102c du même type que la zone 102b. Les zones 102b et 102c correspondent à deux versions différentes du microcode de la STB 101. Ces différences correspondent soit à des mises à jour, soit à des versions comportant des fonctionnalités différentes.

Les zones 102b et 102c sont enregistrés sur une unité de stockage de masse, par exemple un disque dur, de la STB 101.

Les zones 102b et 102c comporte chacune une zone comportant des codes instructions correspondant au démarrage de la STB 101 et comportant des codes instructions permettant à la STB 101 d'enregistrer une nouvelle version du microcode à partir d'une source de données.

La figure 1 montre que la STB 101 comporte plusieurs sources de données. Ici une source de données est un dispositif permettant à la STB 101 d'accéder à une nouvelle version du microcode.

La figure 1 montre que la STB 101 comporte au moins un tuner 104 permettant à la STB 101 de recevoir et de décoder des signaux radiodiffusés correspondant à la diffusion de programmes multimédia, et à la diffusion d'une nouvelle version du microcode.

Dans une variante de l'invention la STB 101 comporte un deuxième tuner 105 identique au tuner 104.

Dans une variante de l'invention la STB 101 comporte un port 106 USB permettant de connecter à la STB 101 un périphérique de stockage USB.

Dans encore une autre variante la STB 101 comporte un lecteur de DVD non représenté.

La figure 1 montre encore que la STB 101 comporte des circuits 107 récepteurs de signaux de commande émis par une télécommande 120.

La figure 1 montre encore que la STB 101 comporte des circuits 108 permettant de connecter la STB 101 à un téléviseur 121.

La figure 1 montre encore que la STB 101 comporte une mémoire 109 de configuration permettant d'enregistrer une configuration de la STB 101. Cette configuration comporte au moins un identifiant d'une zone de la mémoire 102 correspondant au microcode devant être mis en oeuvre au démarrage de la STB 101.

Les éléments 102 à 109 sont interconnectés par un bus 110.

La figure 2 montre une étape 201 préliminaire dans laquelle un utilisateur de la STB 101 la met sous tension ou la sort d'un mode de veille. Cela est réalisé, par exemple, via la télécommande 120.

Lors de l'étape 201, la STB 101 exécute les codes instruction enregistré dans la mémoire 102a. A un moment de cette exécution, correspondant à une étape 202 suivant l'étape 201 la STB 101 lit le contenu de la mémoire 109 pour y trouver l'identifiant de la zone de la mémoire 102 comportant le microcode à exécuter. Un tel identifiant est par exemple une adresse dans la mémoire 102 correspondant au premier code instruction du microcode à exécuter. Dans un autre exemple la mémoire 102 est divisée en bloc numéroté de façon continue, chaque bloc permettant d'enregistrer une version complète du microcode. Dans cette version l'identifiant est un numéro de bloc.

Cette identifiant est trouvé car il est situé à un emplacement prédéterminé de la mémoire 102. La connaissance de cet emplacement fait alors parti des codes instructions de la zone 102a. En d'autres termes cet emplacement est déterminé à la conception et à la compilation des codes instructions de la zone 102a.

Dans une étape 203 suivant l'étape 202 la STB 101 exécute le microcode qui a été identifié à l'étape 202.

Ce microcode, quelque soit sa version, comporte des codes instructions d'analyse correspondant à l'analyse des données reçues par les dispositifs d'entrées pour y détecter la présence d'une nouvelle version du microcode, ou d'une application que la STB est apte à mettre en oeuvre. Dans une variante ces codes instructions d'analyse sont enregistré dans la mémoire 102a, le microcode comporte alors des codes instructions lui permettant d'invoquer les codes instructions d'analyse.

Ces codes instructions d'analyse sont donc mis en oeuvre, à intervalle régulier ou sur événement prédéterminé, par le microcode dans une étape 204 de détection de la disponibilité d'une nouvelle version du microcode. Un événement pouvant provoquer la mise en oeuvre des codes instructions d'analyse est la mise en fonction de la STB 101.

Si aucune nouvelle version n'est détectée à l'étape 204 alors la STB passe de l'étape 204 à l'étape 203 dans laquelle elle poursuit l'exécution du microcode sélectionné à l'étape 202. Dans le cas contraire la STB 204 passe à une étape 205 facultative d'authentification de la version du microcode détecté. Dans cette étape la STB 101 vérifie aussi si le microcode disponible n'est pas déjà présent dans la mémoire 101 auquel cas il est inutile de l'enregistrer à nouveau.

Considérons que la STB 101 a détecté, à son démarrage, une nouvelle version de microcode disponible et diffusée par les airs, c'est-à-dire que la STB 101 a détecté cette nouvelle version via l'un de ses tuners. La STB 101 alloue alors l'un de ses tuners à la gestion de cette nouvelle version de son microcode. Cela signifie que ce tuner, et plus généralement le dispositif d'entrée via lequel la nouvelle version a été détectée, n'est plus disponible pour autre chose que la gestion de la nouvelle version du microcode.

Dans la mesure ou la STB 101 comporte deux tuners, ou dans la mesure ou le dispositif d'entrée via lequel la nouvelle version du microcode a été détecté n'est pas un tuner, il reste toujours un tuner disponible pour permettre à la STB 101 d'assumer une partie, voir toutes, ses fonctions et donc de répondre aux sollicitations de la télécommande 120 alors même que la STB 101 est en train de gérer la réception d'une nouvelle version de microcode.

Par exemple l'utilisateur peut continuer à paramétrer le tuner qui ne sert pas à la gestion de la réception du microcode pour sélectionner une chaîne qu'il souhaite visualiser. Du point de vu de l'utilisateur la STB 101 est donc toujours fonctionnelle. Si l'utilisateur essayait de mettre en oeuvre une fonction nécessitant la disponibilité des deux tuners, il se verrait signifier un message lui indiquant que cette fonction n'est plus disponible jusqu'à la fin de la gestion de la nouvelle version du microcode. Dans une variante, dans ce cas, la STB 101 interrompt la gestion de la nouvelle version du microcode pour la reprendre ultérieurement. Dans une variante, le tuner utilisé pour la réception du microcode est libéré afin que l'utilisateur puisse utiliser la fonction qu'il souhaite.

Dans la pratique une nouvelle version est numériquement signée avec une clé secrète connue de la STB 101. La STB 101 est donc apte, à déterminer si la nouvelle version du microcode détectée est bien authentique.

Si ce n'est pas le cas, la STB 101 passe à l'étape 203. Si la nouvelle version est authentique alors la STB 101 passe à une étape 206 d'enregistrement.

Dans l'étape 206 la STB détermine un emplacement pour enregistrer la nouvelle version du microcode détectée à l'étape 204. Cet emplacement est dans la mémoire 102, à la suite de la dernière version du microcode à avoir été enregistrée. Si la place dans la mémoire 102 était insuffisante, alors l'emplacement choisi est celui de la version la plus ancienne du microcode.

Pour cette gestion de l'emplacement de la nouvelle version du microcode la mémoire 102 est vue par le microcode actif de la STB 101 comme un disque doté d'une capacité donnée. Le microcode actif comporte donc, ou peut invoquer, des codes instruction pour la gestion de disque. Ces codes instructions correspondent aux services de bases rendus par un système d'exploitation à une application. Ces services comportent au moins l'énumération du contenu de la mémoire, l'effacement d'un fichier de la mémoire, l'enregistrement dans un fichier de la mémoire.

La STB 101 a donc accès à tous moment au contenu de la mémoire 102. Ce contenu est vu comme un ensemble de fichiers. Chaque fichier comporte des propriétés comme un numéro de version. Ce numéro de version permet de présenter à l'utilisateur les fichiers, mais aussi de déterminer si une version disponible via un dispositif d'entrée n'est pas déjà enregistrée dans la mémoire 102.

A la fin de l'étape 206 une nouvelle version du microcode est disponible dans la mémoire 102. Soit la STB 101 avertit immédiatement l'utilisateur. Soit la STB 101 met à jour un paramètre de la mémoire 109 indiquant à la STB 101 qu'elle doit avertir l'utilisateur de la disponibilité d'une nouvelle version du microcode à la prochaine mise en fonction de la STB 101. Dans le cas d'un avertissement immédiat, ou différé, celui-ci prend la forme d'un message OSD (On Screen Display, affichage dans l'écran) qui se superpose à l'image qu'est en train de visualiser l'utilisateur de la STB 101.

Cet utilisateur peut alors décider, via la télécommande 120, de prendre en compte ce message ou de l'ignorer. Le fait de l'ignorer valide du point de vue de la STB que l'utilisateur est informé de la disponibilité d'une nouvelle version du microcode. Cela signifie que la STB 101 n'avertira plus l'utilisateur de la disponibilité de ce nouveau microcode.

Si l'utilisateur prend en compte ce message, cela provoque l'affichage d'un nouveau message OSD listant les versions de microcode disponibles et permettant à l'utilisateur de sélectionner celle qu'il souhaite activer. Chaque microcode est présenté associé à un nom et/ou un numéro de version. Si l'utilisateur sélectionne un microcode différent de celui actuellement exécuté, cela provoque la mise à jour de la mémoire 109 avec l'identifiant du microcode sélectionné et immédiatement après cette mise à jour le redémarrage de la STB 101. Lors de ce redémarrage c'est le microcode sélectionné juste avant qui sera exécuté. Ce microcode est l'un de ceux présent dans la mémoire 102.

On précise ici que la sélection du microcode peut être faîte à n'importe quel moment par la bonne combinaison de touche sur la télécommande 120.

L'utilisateur est donc habilité à prendre en compte un message indiquant la fin du téléchargement du microcode de plusieurs façon :
- une option lui permet de redémarrer immédiatement le STB avec le nouveau microcode,
- une option lui permet d'indiquer que le prochain redémarrage manuel de la STB se fera avec le nouveau microcode. Dans ce cas l'utilisateur continue à utiliser normalement la STB.

Avec l'invention la STB 101 peut donc mettre en oeuvre plusieurs versions de microcode.

Dans une variante de l'invention le microcode selon l'invention comporte une étape de détection mise en oeuvre lors de l'activation de n'importe quel dispositif d'entrée. Ainsi lors de la connexion d'un périphérique USB le microcode commence par détecter si ce périphérique comporte une version authentifiée du microcode à enregistrer dans la mémoire 102. Il en va de même avec l'introduction d'un DVD dans un lecteur de DVD que comporte la STB 101 ou connecté à la STB 101.

## Revendications

1. Procédé de téléchargement d'une application de mise à jour d'une nouvelle version d'un microcode d'un récepteur/décodeur de télévision (101) comportant au moins deux dispositifs de réception de données, les étapes suivantes étant mises en oeuvre par ledit récepteur/décodeur de télévision:
- démarrage (201) du récepteur/décodeur de télévision suite à une sollicitation d'un utilisateur du récepteur,
- lecture (202) d'un paramétrage de configuration de démarrage du récepteur/décodeur,
- détection (204) de la disponibilité d'une nouvelle application de mise à jour d'une nouvelle version du microcode,
Le procédé comportant également les étapes suivantes mises en oeuvre par ledit récepteur/décodeur de télévision:
- configuration du récepteur/décodeur en fonction d'une action de l'utilisateur pour sélectionner une version du microcode par défaut, le démarrage étant exécuté selon la configuration du récepteur/décodeur de télévision, la configuration portant sur la version du microcode par défaut à exécuter au démarrage,
- enregistrement (206) de la nouvelle application détectée sur un support de sauvegarde à partir de et selon la disponibitité de l'un au moins des deux dispositifs de réception de données compte tenu des fonctions du récepteur/décodeur de télévision mise en oeuvre par un utilisateur.

2. Procédé selon la revendication 1 **caractérisé en ce qu'**il comporte une étape de mise à jour d'une mémoire de configuration dont le contenu désigne l'application à exécuter au démarrage du récepteur décodeur de télévision.

3. Procédé selon l'une des revendications 1 ou 2, **caractérisé en ce que** le premier dispositif de réception de données est un tuner.

4. Procédé selon la revendication 3, **caractérisé en ce que** le deuxième dispositif de réception de données est un tuner.

5. Procédé selon la revendication 3, **caractérisé en ce que** le deuxième dispositif de réception de données est un port de connexion d'un périphérique local parmi la liste formé par au moins: SB, Wifi, IEE1394.

6. Procédé selon l'une des revendications 1 à 5, **caractérisé en ce que** le support de sauvegarde est un périphérique de stockage de masse intégré au récepteur décodeur de télévision.

7. Procédé selon l'une des revendications 1 à 6, **caractérisé en ce que** l'enregistrement de la nouvelle application est sécurisée au moins par l'authentification de la source de données délivrant les données correspondant à l'application.

## Claims

1. A method for downloading an update application for a new version of a microcode of a television receiver/decoder (101) comprising at least two data reception devices, the following steps being implemented by said television receiver/decoder:
- starting up (201) the television receiver/decoder following a user action on the receiver,
- reading (202) a parameter setting of the start-up configuration of the receiver/decoder,
- detecting (204) the availability of a new update application for a new version of the microcode,
the method also comprising the following steps, implemented by said television receiver/decoder:
- configuring the receiver/decoder according to an action from the user to select a default version of the microcode, the start-up operation being executed according to the configuration of the television receiver/decoder, the configuration being based on the default version of the microcode to be executed at start-up,
- saving (206) the new application detected on a back-up support from and according to the availability of at least one of the two data reception devices, taking into account the functions of the television receiver/decoder implemented by a user.

2. A method according to claim 1, **characterised in that** it comprises a step for updating a configuration memory, the content of which designates the application to be executed at the start-up of the television receiver/decoder.

3. A method according to one of claims 1 or 2, **characterised in that** the first data reception device is a tuner.

4. A method according to claim 3, **characterised in that** the second data reception device is a tuner.

5. A method according to claim 3, **characterised in that** the second data reception device is a connection port of a local peripheral from the list formed from at least: USB, Wifi, IEE1394.

6. A method according to one of claims 1 to 5, **characterised in that** the back-up support is a mass storage device integrated into the television receiver/decoder.

7. A method according to one of claims 1 to 6, **characterised in that** the saving of the new application is protected at least by authenticating the data source issuing the data corresponding to the application.

## Patentansprüche

1. Verfahren zum Herunterladen einer Update-Anwendung für eine neue Version eines Mikrocodes für einen Fornsehempfänger/ -decoder (101) mit zumindest zwei Vorrichtungen für den Datenempfang, wobei der besagte Fernsehempfänger/ -decoder die folgenden Schritte umsetzt:
- Start (201) des Fernsehempfängers/ -decoders nach einem Befehl eines Benutzers des Empfängers
- Lesen (202) einer Parametrierung der Startkonfiguration des Empfängers/ Decoders
- Erfassen (204) der Verfügbarkeit einer neuen Update-Anwendung für eine neue Version des Mikrocodes,
wobei das Verfahren auch die folgenden Schritte enthält, die vom besagten Fernsehempfänger/-decoder umgesetzt werden:
- Konfiguration des Empfängers/ Decoders in Abhängigkeit von einer Handlung des Benutzers zum Auswählen eines standardmäßige Mikrocodes, wobei der Start je nach Konfiguration des Fernsehempfängers/ -decoders ausgeführt wird, und die Konfiguration die standardmäßige Mikrocodeversion betrifft, die es beim Start auszuführen gilt,
- Speichern (206) der neuen Anwendung, die auf einem Speichermedium erfasst werden, ausgehend von, und entsprechend der Verfügbarkeit von zumindest einem der beiden Vorrichtungen zum Empfangen von Daten und unter Berücksichtigung der Funktionen des Fernsehempfängers/ -decoders, die von einem Benutzer angewandt werden.

2. Verfahren nach Anspruch 1, **dadurch gekennzeichnet, dass** es einen Schritt zum Updaten eines Konfigurationsspeichers enthält, dessen Inhalt die Anwendung bezeichnet, die beim Start des Fernsehempfängers/ -decoders auszuführen ist.

3. Verfahren nach einem der Ansprüche 1 oder 2, **dadurch gekennzeichnet, dass** die erste Vorrichtung für den Datenempfang ein Turner ist.

4. Verfahren nach Anspruch 3, **dadurch gekennzeichnet, dass** die zweite Vorrichtung für den Datenempfang ein Tuner ist.

5. Verfahren nach Anspruch 3, **dadurch gekennzeichnet, dass** die zweite Vorrichtung für den Datenempfang ein Schnittstellenport eines lokalen Peripheriegeräts aus einer Liste mit zumindest folgenden Schnittstellen ist: USB, W-LAN, IEE1394.

6. Verfahren nach einem der Ansprüche 1 bis 5, **dadurch gekennzeichnet, dass** das Speichermedium ein Massenspeicher-Peripheriegerät ist, das in den Fernsehempfänger/ -decoder integriert ist.

7. Verfahren nach einem der Ansprüche 1 bis 6, **dadurch gekennzeichnet, dass** die Speicherung der neuen Anwendung zumindest durch die Authentifizierung der Datenquelle gesichert ist, die die Daten entsprechend der Anwendung beisteuert.
